# EUROPÄISCHE PATENTSCHRIFT

(11) **EP 0 667 625 B1**
(45) Veröffentlichungstag und Bekanntmachung des Hinweises auf die Patenterteilung: **23.07.1997**
(21) Anmeldenummer: 94101964.8
(22) Anmeldetag: 09.02.1994
(51) Int. Cl.: H01B 1/22, H01B 1/24, C08K 3/08, C08K 7/06

(54) **Elektrostatisch beschichter Polyamidwerkstoff, Verwendung und Verfahren zu seiner Herstellung**
Electrostatic coated polyamide material, its use and process for its preparation
Matériau en polyamide électrostatique revêtu, son utilisation et méthode pour sa préparation

(43) Veröffentlichungstag der Anmeldung: 16.08.1995
(73) Patentinhaber: Frisetta Polymer GmbH & Co. KG, 79677 Schönau/Schwarzwald (DE)
(72) Erfinder: Baquè, Thomas, D-79677 Schönau i. Schw. (DE)
(74) Vertreter: Grünecker, Kinkeldey, Stockmair & Schwanhäusser Anwaltssozietät

(56) Entgegenhaltungen:
- PATENT ABSTRACTS OF JAPAN vol. 010, no. 120 (C-343)6. Mai 1986 & JP-A-60 245 668 (SUWA SEIKOSHA KK) 5. Dezember 1985
- PATENT ABSTRACTS OF JAPAN vol. 010, no. 350 (C-387)26. November 1986 & JP-A-61 151 283 (DAINIPPON PRINTING CO LTD) 9. Juli 1986
- PATENT ABSTRACTS OF JAPAN vol. 011, no. 361 (C-459)25. November 1987 & JP-A-62 131 033 (ASAHI CHEM IND CO LTD) 13. Juni 1987

## Beschreibung

Die Erfindung, offenbart in den Ansprüchen 1-5, bezieht sich auf einen mit einem Pulverlack elektrostatisch beschichteten Polyamidwerkstoff.

Polyamidwerkstoffe kommen dort zur Anwendung, wo das Grundmaterial der Formstücke aus einem Werkstoff mit elektrischer Leitfähigkeit, hoher Wärmekapazität und hoher Wärmeformstabilität bestehen muß, der bei Temperaturen bis 240°C verwendet wird.

Bekanntlich lassen sich die im Spritzgußverfahren verarbeiteten Polyamidfertigteile nachträglich mit Spezialfarbstoffen im wäßrigen Bad bei ca. 70 bis 95°C auffärben.

Für Oberflächeneffekte braucht man Lacke mit artverwandtem Grundstoff und Speziallösemitteln.

Spritzgußteile aus Polyamid können auch pulverlackiert werden, wobei industriell die Pulverlackierung immer mehr an Bedeutung gewinnt. Die Gründe hierfür liegen u.a. in der Lösungsmittelfreiheit der Lacksysteme und in der einfachen Wiederaufbereitung der Pulverlacke.

Bei Kombination von Metall- und Kunststoffteilen müssen jedoch die Teile in separatem Verfahren lackiert werden, wobei auch verschiedene Lacksysteme verwendet werden.

Die JP-A-58-176224 offenbart elektrostatisch beschichtete Polyamidzusammensetzungen, die elektrisch leitenden Ruß enthalten.

Der Erfindung liegt die Aufgabe zugrunde, einen mit einem Pulverlack elektrostatisch beschichteten Polyamidwerkstoff zur Verfügung zu stellen, wobei die aus Polyamidwerkstoff erhaltenen Elemente als auch die metallischen Elemente eine Oberflächennacharbeitung gleicher Art zulassen.

Diese Aufgabe wird erfindungsgemäß durch die Merkmale des Anspruchs 1 gelöst. Weitere Ausgestaltungen der Erfindung sind den Unteransprüchen zu entnehmen.

Durch die erfindungsgemäße Zusammensetzung des Polyamidwerkstoffs werden dessen mechanische Eigenschaften hinsichtlich der Zeitstandfestigkeit auch bei höheren Temperaturen verbessert, so daß derartige Kunststoffe in bisher dem Bunt- und Leichtmetallguß vorbehaltene technische Anwendungsgebiete eindringen. Allgemein werden Zug-, Biege-, Druckfestigkeit wesentlich erhöht. Die höhere Wärmeleitfähigkeit vermindert innere Spannungen bei Temperaturwechsel, auch bei der Verarbeitung. Die Umgebungsbedingungen haben relativ geringen Einfluß auf die Maßhaltigkeit der Elemente und die verbesserten elektrischen Werte.

Für jede Art der Anwendung von Kunststoff, vor allem jedoch auf dem Gebiet des täglichen Gebrauchs oder der maßhaltigen Teile ist von Wert, daß glasklare und transparent oder gedeckt in beliebigen Farben haltbar durchgehend einzufärbende Kunststoffe zur Auswahl stehen und daß Kunststoffe durch die Formmittel von vorn herein mit dichten, gebrauchsbeständigen, glänzenden oder matten Oberflächen versehen werden können.

Mit Hilfe des erfindungsgemäßen Polyamidwerkstoffs ist es möglich, die metallischen Elemente und die Kunststoffelemente komplett zu montieren und anschließend als einheitliches Formstück elektrostatisch im Pulverlackierverfahren zu beschichten. Dadurch
- wird eine absolut gleiche Farbe und Oberfläche der Baugruppen erzielt;
- ist nur eine Beschichtungsanlage erforderlich;
- ist zur Polyamidlackierung kein Lösungsmittel mehr erforderlich;
- sind keine lackierten oder gefärbten Polyamidelemente zu bevorraten.

Ein bestimmter Oberflächeneindruck durch eine Oberflächenbeschichtung als auch die notwendigen Schutzfunktionen können am ehesten durch Pulverlackierung erreicht werden.
Hierzu ist es erforderlich, daß der Polyamidwerkstoff elektrisch leitfähig ist, um ihn lektrisch aufladen zu können. Dadurch wird eine gute Haftung des Pulvers auf der Oberfläche des Werkstücks vor dem Einbrennen gewährleistet. Außerdem ist sie für eine gleichmäßige Auftragsdicke mit verantwortlich.

Da der Pulverlack erst bei relativ hohen Temperaturen schmilzt und auch in der Schmelze eine vergleichsweise hohe Viskosität besitzt, ist es erforderlich, daß der Polyamidwerkstoff eine große Wärmemenge aufnehmen kann. Beim Wirbelbettverfahren ist dies besonders wichtig, da hier die Teile vor der Beschichtung aufgeheizt werden, und die gespeicherte Wärme muß das Pulverlacksystem aufschmelzen.

Weiterhin muß der Abkühlungsvorgang und der Wärmeausdehnungskoeffizient des Werkstoffes, besonders bei Baugruppen, wo Metall- und Kunststoffteile kombiniert beschichtet werden, dem Metall sehr ähnlich sein, um Risse zu vermeiden.

Diese Forderungen werden durch einen Werkstoff der erfindungsgemäßen Zusammensetzung erreicht.
Das Metallpulver sorgt für die Wärmespeicherung und gleicht den Wärmeausdehnungskoeffizient an. Zusätzlich erhöht es die Wärmeformbeständigkeit des Polyamids. Die Kohlefaser verbindet die Metallpulverteilchen und sorgt somit für die elektrische Leitfähigkeit und den Ladungstransport im Polyamidwerkstoff.

Nach einer besonderen Ausführungsform ist es zweckmäßig ein Metallpulver mit kugelförmigen Teilchen anzuwenden, deren Größe bevorzugt im Bereich von 50 bis 80 µm liegt und eine geringe Kornhärte aufweisen; diese Metallpulver weisen weiterhin eine hohe Beständigkeit gegen Oxidation sowie in pH-Bereichen zwischen 4 und 10 auf.

Bei dem erfindungsgemäßen Polyamidwerkstoff kann als metallische Komponente ein pulverförmiges Buntmetall oder eine pulverförmige ein Buntmetall enthaltende Legierung eingesetzt werden, wie z. B. Cu, Messing oder Bronze.

Nach der Erfindung sind die Gemischteilchen miteinander und mit einem etwaigen Metallelement des Formstückes verbindbar. Dies geschieht mittels einer form- und flächenschlüssigen mechanischen Verbindung.

Der erfindungsgemäße Polyamidwerkstoff findet seine Anwendung insbesondere als Profilverbindungselement, beispielsweise bei Duschabtrennungen als Eck- und Winkelverbinder.

Teile, die aus Blech oder Druckguß gefertigt werden, können durch einen erfindungsgemäßen Polyamidwerkstoff ersetzt werden, so bei Frontblenden an Wasch- und Spülmaschinen. Durch das hohe Gewicht der Teile wird der Eindruck von Metall vermittelt. Der erfindungsgemäße Polyamidwerkstoff kann allein in Verbindung mit metallischen Elementen zur Anfertigung von Armaturenbetätigungen, Brauseköpfe, Seifenschalen eingesetzt werden und somit den Einsatz von Zinkdruckguß entbehrbar machen.

Anhand eines Ausführungsbeispiels, das die Herstellung eines Formstücks beschreibt, wird die Erfindung näher erläutert.

Es wurde durch mechanisches Vermischen mittels eines Taumel- oder Pflugscharmischers ein homogenes Stoffgemisch, bestehend aus 50 Gew.-% eines Bronze-enthaltenden Pulvers mit einer Teilchengröße von 70 µm, 5,0 Gew.-% Kohlefasern, 0,8 % Gew.-% eines Hitzestabilisators, wie Octadecyl-3-(3,5-ditert.-butyl-4)-hydroxyphenylpropionat, 1,0 Gew.-% eines Prozeßstabilisators, wie Nonylphenylphosphit, 0,8 Gew.-% eines Gleitmittels, wie Ca-Stearat und der Rest Polyamid 6, hergestellt. Dieses Gemisch wird in einem Doppelschneckenextruder aufgeschmolzen und dispergiert. Die Polymerschmelze wird über eine Strangdüse aus dem Extruder ausgetragen, durch ein Wasserbad geführt und granuliert. Das Granulat wird anschließend auf eine Feuchtigkeit < 0,1 % getrocknet.

Das Granulat wird durch einen Spritzgußprozess zu dem gewünschten Formstück umgeformt. Bei diesem Prozeß wird das Granulat über seinen Schmelzpunkt erhitzt. Die Schmelze wird mit hohem Druck und hoher Geschwindigkeit in eine der Fertigteilkontur entsprechend geteilte Negativform eingespritzt. Die Schmelze wird abgekühlt und das Fertigteil aus der Form entnommen.

Das so entstandene Polyamidteil wird mit dem Metallteil durch eine mechanische Steckverbindung kombiniert. Diese ist so ausgelegt, daß eine formschlüssige Verbindung stattfindet. Das Teil wird nun in einen Rahmen eingespannt, der für die Führung des Teils im Ofen und für die elektrische Verbindung sorgt. Der Pulverlack wird nun mittels einer elektrostatischen Spritzpistole auf das Teil aufgespritzt. Zu beachten ist dabei, daß ein gleichmäßiger Pulverauftrag erfolgt. Anschließend wird das Teil mit seinem Rahmen in den Einbrennofen eingebracht. Der Pulverlack wird dabei über seinen Schmelzpunkt erwärmt und bildet eine geschlossene Oberflächenschicht. Anschließend wird das Teil langsam ausgekühlt und aus dem Rahmen entnommen. Damit ist der Prozeß abgeschlossen.

## Patentansprüche

1. Mit einem Pulverlack elektrostatisch beschichteter Polyamidwerkstoff aus einem Gemisch, enthaltend Polyamid 6 oder 6.6 0,2 bis 10 Gew.-% Kohlefasern und Zusätze, dadurch gekennzeichnet, daß die Mischung 30-60 Gew.-% eines metallischen Pulvers enthält, wobei das Gewichtsverhältnis des metallischen Pulvers zu den Kohlefasern 150:1 bis 6:1 beträgt.

2. Polyamidwerkstoff nach Anspruch 1, **dadurch gekennzeichnet**, daß das Gemisch
0,1 - 2,0 Gew.-% Hitzestabilisator
0,1 - 2,0 Gew.-% Prozeßstabilisator und
0,5 - 3,0 Gew.-% Gleitmittel,
bezogen auf das Gesamtgewicht des Gemisches, enthält und der restliche Anteil des Gemisches aus Polyamid 6 oder Polyamid 6.6 besteht.

3. Polyamidwerkstoff nach Anspruch 1 oder 2, **dadurch gekennzeichnet**, daß das metallische Pulver Teilchen geringer Kornhärte aufweist, deren Größe im Bereich von 50 bis 80 µm liegt.

4. Polyamidwerkstoff nach Anspruch 1, **dadurch gekennzeichnet**, daß das Metall ein Buntmetall oder eine ein Buntmetall enthaltende Legierung ist.

5. Polyamidwerkstoff nach Anspruch 4, **dadurch gekennzeichnet**, daß das Metall Kupfer und die Legierung Bronze oder Messing ist.

## Claims

1. A polyamide material electrostatically coated with a powder coating comprising a mixture containing polyamide 6 or polyamide 6.6, 0.2 to 10 percent by weight of carbon fibres and additives, characterized in that said mixture contains 30 to 60 percent by weight of a metallic powder, the ratio of said metallic powder to said carbon fibres being 150 : 1 to 6 : 1.

2. The polyamide material according to claim 1,
characterized in that said mixture contains
0.1 - 2.0 percent by weight of a heat stabilizer
0.1 - 2.0 percent by weight of a process stabilizer
0.5 - 3.0 percent by weight of a lubricant,
based on the total weight of said mixture, and the remaining part of said mixture consists of polyamide 6 or polyamide 6.6.

3. The polyamide material according to claim 1 or 2, characterized in that said metallic powder has particles of a low grain hardness whose size is within the range of from 50 to 80 µm.

4. The polyamide material according to claim 1,
characterized in that said metal is a nonferrous metal or an alloy containing a nonferrous metal.

5. The polyamide material according to claim 4,
characterized in that said metal is copper and said alloy is bronze or brass.

## Revendications

1. Matériau en polyamide revêtu électrostatiquement avec une peinture en poudre, fait d'un mélange contenant du polyamide 6 ou 6.6, de 0,2 à 10% en poids de fibres de carbone et des additifs, caractérisé en ce que le mélange contient de 30 à 60% en poids d'une poudre métallique, le rapport en poids de la poudre métallique sur les fibres de carbone étant de 150:1 à 6:1.

2. Matériau en polyamide selon la revendication 1, caractérisé en ce que le mélange contient
de 0,1 à 2,0% en poids de stabilisant thermique,
de 0,1 à 2,0% en poids de stabilisant lors de la transformation, et
de 0,5 à 3,0% en poids de lubrifiant,
ramené au poids total du mélange, le reste du mélange étant composé de polyamide 6 ou de polyamide 6.6.

3. Matériau en polyamide selon la revendication 1 ou la revendication 2, caractérisé en ce que la poudre métallique présente des particules avec une dureté de grain réduite, dont la taille est dans une plage de 50 à 80 µm.

4. Matériau en polyamide selon la revendication 1, caractérisé en ce que le métal est un métal non ferreux ou bien un alliage contenant un métal coloré non ferreux.

5. Matériau en polyamide selon la revendication 4, caractérisé en ce que le métal est le cuivre et l'alliage est du bronze ou du laiton.
